# EUROPEAN PATENT SPECIFICATION

(11) **EP 4 624 331 B1**
(45) Date of publication and mention of the grant of the patent: **02.12.2026**
(21) Application number: 24167128.8
(22) Date of filing: 28.03.2024
(51) Int. Cl.: B64D 11/06, A47D 9/00, A47D 13/02, B60N 2/28

(54) **AN AIRCRAFT BABY BASSINET**
BABYBASSINET FÜR EIN FLUGZEUG
BERCEAU DE BÉBÉ D'AÉRONEF

(43) Date of publication of application: 01.10.2025
(73) Proprietor: Airbus Operations GmbH, 21129 Hamburg (DE)
(72) Inventor: Wesselink, Christian, 21129 Hamburg (DE); Ecke, Paul-Niklas, 21129 Hamburg (DE)
(74) Representative: Schornack, Oliver

(56) References cited:
- US-A- 2 653 330
- US-A- 3 735 430
- US-A1- 2010 107 331
- US-A1- 2014 208 503
- US-A1- 2021 212 478
- US-A1- 2023 027 770
- US-B2- 10 694 866
- CAROLINE: "FlyAway Kids Bed: Product Review * Bébé Voyage", 4 August 2021 (2021-08-04), pages 1 - 7, XP093185868, Retrieved from the Internet <URL:https://bebevoyage.com/flyaway-kids-bed-product-review/> [retrieved on 20240715]

## Description

The present disclosure generally relates to an aircraft baby bassinet, and more particularly to an aircraft section having an aircraft baby bassinet that can be placed flexible in the passenger cabin of the aircraft.

A conventional baby bassinet for an aircraft is designed to be detachably mounted to a separating wall in the passenger cabin. For instance, in front of a first row of a particular cabin class (such as business or economy class) there is regularly a separating wall delimiting the passenger cabin or section of the passenger cabin. The separating wall can be part of a monument, such as a galley or a lavatory, or separates the seats from a transverse aisle of the aircraft.

The separating wall is usually equipped with receiving components, into which a bolt or the like of the baby bassinet can be inserted. This allows hanging the baby bassinet to the wall in front of the first row seats.

However, this requires strengthening the separating wall to carry the weight of the baby bassinet and a baby/child placed therein, and to have a plurality of the receiving components provided therein, in order to allow flexible placement of the baby bassinet relative to the seat configuration adjacent to the separating wall.

Furthermore, US 2023/027770 A1 relates to an aircraft cabin including an aft tapered section that would require one or more rows of triple seats with an increasingly narrow width. Instead, the select aircraft includes an adapter plate positioned exterior of an armrest of an aircraft seat in such seat row. The adapter plate includes a coupler configured to attach to the aircraft seat, and a mount point to attach to a mount bracket of a removable auxiliary aircraft accessory, such as a bassinet.

It is an object of the present disclosure to provide an improved baby bassinet solution for an aircraft.

This object is solved by the present invention as defined in the independent claims. Preferred embodiments are defined by the dependent claims.

According to a first aspect to better understand the present disclosure, an aircraft section comprises a floor, a first passenger seat, and an aircraft baby bassinet. The aircraft baby bassinet comprises a baby bassinet (a cradle or the like allowing a baby to sit or lie therein) having a frame, a holding bracket configured to articulate the frame, and a stand coupled to the holding bracket. The stand comprises a foot configured to stand on the floor.

Thus, the aircraft baby bassinet allows employing the baby bassinet at any passenger seat, irrespective of a separating wall having receiving components installed therein. This does not only allow designing the separating wall in a lightweight manner, as it is not to be designed to carry hanging loads. Such aircraft baby bassinet further allows selling any passenger seat to a parent having a baby with them. This simplifies the process of assigning passengers seats within the aircraft, since parents with babies are not restricted to the first row / the row directly behind a predefined dedicated separating wall.

Actually, the aircraft baby bassinet does not require to be mounted to any other component of the aircraft, as it can freely stand adjacent to a parent. Particularly, the aircraft baby bassinet is placed in front of the passenger seat of the parent, so that the baby is directly in front of the parent (as it is with conventional baby bassinets mounted to a separating wall).

The aircraft section further comprises a second passenger seat arranged in front of the first passenger seat. The aircraft baby bassinet further comprises a belt attached to a back rest of the second passenger seat. Thus, the upper portion of the aircraft baby bassinet, particularly including the baby bassinet (cradle) is secured by the belt. This allows sizing the stand smaller, as the baby bassinet (cradle) is additionally secured in an approximately horizontal direction.

Furthermore, the baby bassinet can be freely moved within the aircraft. Thus, if the neighbouring seat is empty, the aircraft baby bassinet can be placed in front of the empty seat. Alternatively, some airlines may wish to dedicate certain areas for families. The disclosed aircraft baby bassinet facilitates implementing such dedicated areas and moving the aircraft baby bassinet and baby to such a dedicated area.

Thus, the disclosed aircraft baby bassinet provides multiple opportunities for aircraft operators, more flexibility for parents travelling with babies or small children, and saves weight with respect to separating walls, which cannot only be designed lightweight, but may be replaced by a completely different aircraft cabin structure/component.

In an implementation variant, the foot of the aircraft baby bassinet stand can comprise a plurality of wheels. Having a plurality of wheels, preferably three or more wheels, allows moving the aircraft baby bassinet around the aircraft passenger cabin without carrying it. It also allows placing the aircraft baby bassinet shortly aside, in case the parent requires access to the foot space of their passenger seat, to stand up or the like. This facilitates travelling with a baby bassinet compared to a conventional fixedly mounted baby bassinet. One or more of the wheels can have a brake, in order to block the aircraft baby bassinet from moving.

In an implementation variant, the foot can comprise a stopper. The stopper can be made from a slip resistant (non-skid) material, such as a rubber material, and/or can have a rough surface. Particularly, the stopper can be made from a material that does not slip or skid on the upper surface of the floor of the cabin, such as a carpet or seat rail or the like. Furthermore, the stopper can simply be placed at an end of the stand, i.e. the stopper forms the foot of the stand or at least as portion thereof. It is to be understood that a plurality of stoppers can be provided. As a mere example, depending on the form of the stand, there may be several bottom ends of the stand (e.g., like a tripod), each equipped with a stopper at its free end.

In an implementation variant, the foot can comprise a horizontal frame holding the plurality of wheels spaced apart from one another. Such horizontal frame can have any desired form, such as a triangle, rectangle, a circle, an ellipse or the like. The plurality of wheels are mounted to the foot in a spaced apartment manner. Thus, the plurality of wheels (preferably three or more) can be arranged approximately horizontally, so that they are all on the floor and provide a firm stand of the aircraft baby bassinet. It is to be understood that the horizontal frame may likewise hold a plurality of stoppers, in addition to or instead of a plurality of wheels.

In an implementation variant, the stand can be formed to have the foot arranged at least partially underneath the first passenger seat. For instance, the stand may have a portion that runs from the baby bassinet to the foot, so that a centre of gravity of the aircraft baby bassinet is arranged above the foot. Since the baby bassinet is to be arranged in front of the passenger seat, the foot may be sized in an approximately horizontal direction to such an extent that at least a portion of the foot is arranged underneath the passenger seat.

As a mere example, the stand (or at least the portion of the stand) may have a bent or curved form, which transitions into the foot at the bottom end thereof. Alternatively, the portion of the stand can be substantially vertical.

As a mere example, the belt can be wrapped around the back rest of the second passenger seat. Alternatively or additionally, the belt can form a loop that can be hooked into a backside of the back rest of the second passenger seat. The second passenger seat may have a dedicated hook for this purpose. Further alternatively, the belt may be hooked into a tray table or coat hook or the like arranged at a surface of the back rest of the second passenger seat facing the first passenger seat.

In an implementation variant, the belt can be attached to the frame and/or to the holding bracket. Actually, the belt can be attached to any upper portion of the aircraft baby bassinet, arranged adjacent to the back rest of the second passenger seat.

In an implementation variant, the stand can form an upright frame of a contour following a contour of the back rest of the second passenger seat. The upright frame connecting an upper portion, where the baby bassinet is arranged, and the foot. Thus, the stand does not (significantly) block the leg space for the passenger sitting on the first passenger seat.

In an implementation variant, the upright frame formed by the stand may follow the outer contour of the back rest (facing the first passenger seats), so that the foot of the stand is arranged underneath the second passenger seat. This frees the leg space and foot space for the passenger sitting in the first passenger seat.

In an implementation variant, the aircraft baby bassinet can further comprise a joint coupled to or integrated into the holding bracket to articulate the frame. Alternatively, the joint is coupled to or integrated into the frame. In any case, the baby bassinet (cradle) can swing (rotate) relative to the stand and holding bracket. Thus, irrespective of the placement of the stand, the baby bassinet can swing, for example, to calm the baby, and will always be in a horizontal position.

In an implementation variant, the aircraft baby bassinet can further comprise a carrying bracket coupled to the joint and configured to rotate relative to the holding bracket. The carrying bracket allows to carry the baby bassinet, i.e. the carrying bracket forms a handlebar.

Alternatively, the joint can be coupled to or integrated into the carrying bracket, and the holding bracket is coupled to the joint.

In any case, a relative movement between each of the baby bassinet, the carrying bracket and the holding bracket allows freely arranging the carrying bracket and the holding bracket, allows rotating/swinging of the baby bassinet, and further allows arranging the stand as required.

In an implementation variant, the belt can be coupled to the carrying bracket.

In an implementation variant, the joint can be configured to lock, in order to block the rotation of the carrying bracket relative to the holding bracket. Thus, once the carrying bracket and holding bracket are arranged relative to one another (as well as relative to the stand), the structure of the aircraft baby bassinet carrying the baby bassinet can be fixed/blocked from relative movement. As a mere example, the joint can comprise a rotation lock and/or a brake and/or a snapping mechanism blocking the rotation of the joint, at least between the carrying bracket and the holding bracket.

In an implementation variant, the stand and the holding bracket can be fixedly connected to one another, so that no relative movement therebetween is possible. Likewise, the stand and the holding bracket can be integrated into one another, so that they form a one-piece device.

According to a second aspect to better understand the present disclosure, an aircraft comprises at least one aircraft section according to the first aspect or one or more of its variants.

The present disclosure is not restricted to the aspects and variants in the described form and order. Specifically, the description of aspects and variants is not to be understood as a specific limiting grouping of features. It is to be understood that the present disclosure also covers combinations of the aspects and variants.

In the following, the present disclosure will further be described with reference to exemplary implementations illustrated in the figures, in which:
- Figure 1: schematically illustrates an aircraft section having a first exemplary aircraft baby bassinet, not falling within the scope of the claims;
- Figure 2: schematically illustrates two side views of the first exemplary baby bassinet;
- Figure 3: schematically illustrates an embodiment of an aircraft section having an aircraft baby bassinet;
- Figure 4: schematically illustrates the aircraft section of Figure 3, wherein a backrest of a front seat is reclined; and
- Figure 5: schematically illustrates a perspective view of the aircraft baby bassinet of Figure 3.

In the following description, for purposes of explanation and not limitation, specific details are set forth in order to provide a thorough understanding of the present disclosure. It will be apparent to one skilled in the art that the present disclosure may be practiced in other implementations that depart from these specific details.

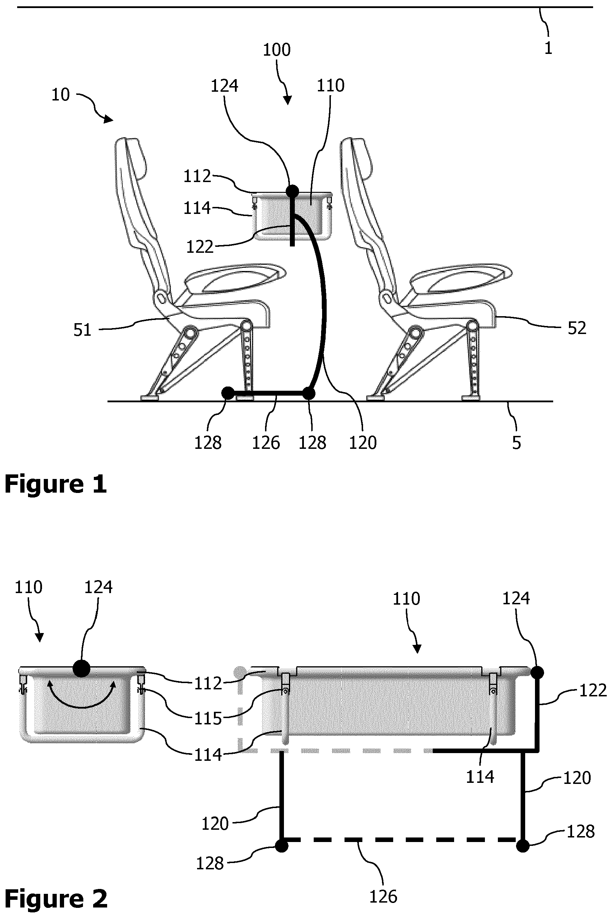

Figure 1 schematically illustrates an aircraft section 10 having a first exemplary aircraft baby bassinet 100. The aircraft section 10 forms part of an aircraft 1 and includes a floor 5, such as a cabin floor. Arranged on the floor is a first passenger seat 51, which will be assumed in the following description as being a passenger seat dedicated for a parent travelling with a baby or small child. The aircraft section 10 further comprises an aircraft baby bassinet 100, which in Figure 1 is placed in front of the first passenger seat 51.

The aircraft baby bassinet 100 comprises a baby bassinet 110 (or baby cradle), which has a frame 112. The aircraft baby bassinet 100 further comprises a holding bracket 122 configured to articulate the frame 112, i.e., to allow a rotational movement of the baby bassinet 110 relative to the holding bracket 122. The aircraft baby bassinet 100 further comprises a stand 120 coupled to the holding bracket 122 and comprising a foot 126 configured to stand on the floor 5.

The stand 120 and the holding bracket 122 may be fixedly coupled to one another. While the stand 120 and the holding bracket 122 may be detachably coupled, both components can likewise be integrated into one another, i.e. form a one-piece component.

The illustrated exemplary aircraft baby bassinet 100 serves for a better understanding of the present disclosure, but does not fall under the claimed invention, and is designed to freely stand on the foot 126, i.e. without any further attachment. Thus, the aircraft baby bassinet 100 can be moved around the aircraft floor 5. The foot 126 comprises a plurality of wheels 128, which are exemplarily arranged at a horizontal frame 126 holding the plurality of wheels 128 spaced apart from one another. Since Figure 1 is a side view, only two wheels 128 are visible. However, for a firm stand, at least three or more wheels 128 should be present. Likewise, the stand 120 in the illustrated side view seems to include only one upright frame 120. It is to be understood that the stand 120 can have more than one upright frame 120, in order to provide a stable structure to hold the baby bassinet 110.

The foot 126 is arranged underneath the baby bassinet 110, in order to avoid overturning of the baby bassinet 110. This leads to the foot 126 being arranged at least partially underneath the first passenger seat 51. However, usually a space underneath a passenger seat 51, 52 of an aircraft 1 is free for storage of hand luggage or the like. Thus, (a portion of) the foot 126 as well as one or more wheels 128 may be arranged in a region underneath the first passenger seat 51.

Furthermore, the aircraft baby bassinet 100 can further comprise a joint 124 coupled to or integrated into the holding bracket 122 to articulate the frame 112. Alternatively, the joint 124 can be integrated into the frame 112 and be coupled to the holding bracket 122. The joint 124 allows a relative rotational movement between the baby bassinet 110 and the holding bracket 122 and stand 120.

Figure 2 schematically illustrates two side views of a baby bassinet 110. In the view illustrating the short side (to the left in Figure 2) only the joint 124 is shown together with a curved double arrow indicating the rotating/swivelling movement of the baby bassinet 110 (cradle) relative to the joint 124. Also for clarity reasons, at the long side (to the right in Figure 2) a portion of the holding bracket 122 with a second joint 124 is shown in dashed grey lines.

Figure 2 illustrates two stands 120 with a respective foot 126 or wheel 128. It is to be understood that the substantially vertically arranged stand 120 may be a single post arranged in the middle of the holding bracket 122, instead of the illustrated pair of stands 120. Furthermore, although the stand/s 120 are illustrated as being substantially vertical, it is to be understood that the stand/s 120 can likewise be arranged at an angle with respect to a vertical line. Such angle pertains both directions, i.e. a longitudinal and transverse direction of the aircraft corresponding to the viewing direction of the right illustration in Figure 2 and the left illustration of Figure 2, respectively.

Furthermore, Figure 2 illustrates a foot 126 as dashed lines, as it may be an optional feature. As a mere example, the foot 126 can be a horizontally arranged frame at which the wheels 128 are attached. For instance, in case of a single stand post 120 such single post may run between a middle portion of the horizontally arranged foot 126 and a middle portion of the holding bracket 122.

The baby bassinet 110 can comprise, besides the frame 112 arranged at an upper rim of the baby bassinet 110, one or more base frames 114. Such base frames 114 may be coupled to the frame 112, and surround the baby bassinet 110 at its (longitudinal) sides and bottom. For instance, the base frames 114 can be used to place the baby bassinet 110 on the floor 5, for example, if detached from the stand 120. As a mere example, the joint 124 may be configured to be at least partially detached from the frame 112, so that the baby bassinet 110 can be used without the stand 120. For instance, the joint 124 may contain at least two portions, which can be separated from one another, and may be attached to one another in a snap click manner.

In addition, the base frames 114 may be configured to rotate with respect to the frame 112. For instance, a joint 115 may be arranged between the frame 112 and the base frames 114, to rotate or swivel the base frames 114, for example, into a horizontal position. Thus, the baby bassinet 110 can be folded together, in order to take up less space when not in use. Likewise, the baby bassinet 110 may be made from a flexible material, such as a fabric, which allows folding the entire baby bassinet 110 into a small device for storage.

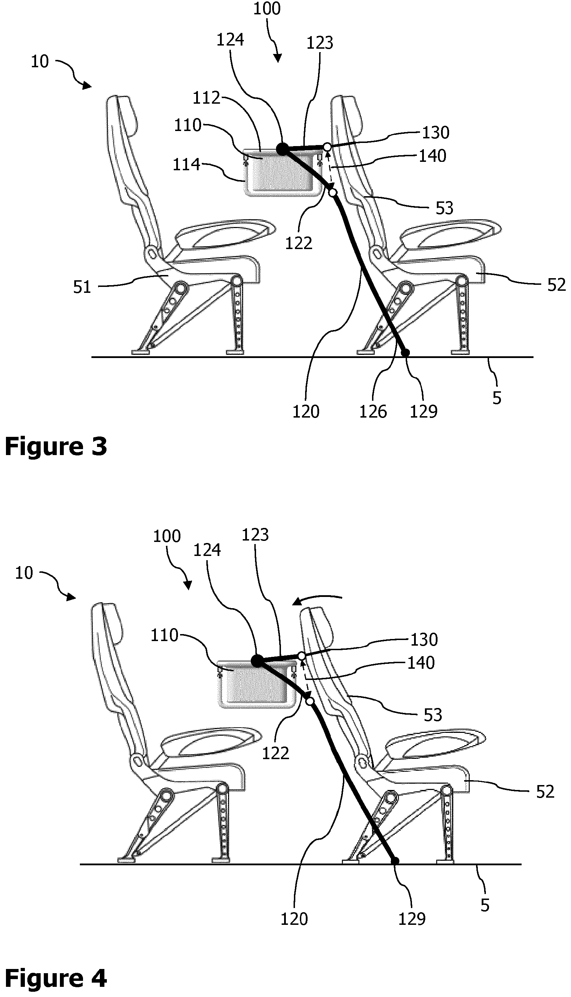

Figure 3 schematically illustrates an aircraft section 10 having a second exemplary aircraft baby bassinet 100, according to the claimed invention. The second exemplary aircraft baby bassinet 100 has a plurality of components similar or identical to those of the first exemplary aircraft baby bassinet 100 of Figure 1. A description of these similar or identical components, referred to by the same reference numeral, is omitted for sake of brevity.

The difference between the first and second exemplary aircraft baby bassinets 100 is that the aircraft baby bassinet 100 of Figure 3 has a different stand 120, i.e. has a different holding structure.

For instance, the stand 120 forms an upright frame 120 with a contour following a contour of a back rest 53 of the second passenger seat 52. This frees the leg space of the passenger sitting in the first passenger seat 51 as can be derived from Figure 3.

Moreover, the stand 120 at its foot 126 has a stopper 129. Thus, instead of wheels, the stand 120 stands on the floor 5 in a slip/skid resistant manner. This further allows the upright frame 120 to actually stands at an angle with respect to a vertical line and substantially parallel to the back rest 53 of the second passenger seat 52.

As can be derived from Figure 3, the aircraft baby bassinet 100 would fall towards the first passenger seat 51, since the foot 126 is not arranged underneath the baby bassinet 110, but underneath the second passenger seat 52. The aircraft baby bassinet 100, hence, further comprises a belt 130 attached to the back rest 53 of the second passenger seat 52. While Figure 3 illustrates the belt 130 to be wrapped around the back rest 53, it is to be understood, that the belt 130 can be looped around another component on the surface of the back rest 53 of the second passenger seat 52. As a mere example, the belt 130 may be wrapped around a tray table, when it is folded into the upright position and secured. Alternatively or additionally, the belt 130 may be wrapped around or hooked into a dedicated baby bassinet hook, a coat hook or the like.

In an example, not falling within the scope of the claims, instead of a belt 130, a rigid hook or loop component (not illustrated) may be provided with the aircraft baby bassinet 100, which hook or loop component can then be engaged with a loop or hook provided at the back rest 53 of the second passenger seat 52.

A holding bracket 122 is illustrated in Figure 3 as having a white filled circle, in order to indicate the horizontally arranged portion thereof. It is to be understood that the holding bracket 122 may not include such horizontally arranged portion, but may be integrated into the stand 120. For instance, if such one-piece component 120, 122 is arranged on each (short) side of the baby bassinet 110, i.e., running from the joint 124 to the foot 126 or stopper 129, a sufficient load carrying structure can be provided.

The aircraft baby bassinet 100 of Figure 3 further differs from the one illustrated in Figure 1, as it includes a carrying bracket 123. Such carrying bracket 123 can be coupled to the joint 124 and can further be configured to rotate relative to the holding bracket 122. The carrying bracket 123 can have a U-shape that spans over the longitudinal extension of the baby bassinet 110, for example, from one joint 124 to the opposite joint 124. Thus, the carrying bracket 123 can be used to carry the baby bassinet 110. As a mere example, the joint/s 124 may be configured to detach the stand 120 and/or the holding bracket 122 therefrom, while the carrying bracket 123 is still pivotally mounted to the frame 112 via the joint 124.

The joint 124 may further be configured to lock. Specifically, the joint 124 may be configured to block the rotation of the carrying bracket 123 relative to the holding bracket 122. Thus, the stand 120, the holding bracket 122 and the carrying bracket 123 may form a rigid structure, when the joint 124 is locked. Locking the joint 124 allows fixing the carrying bracket 123 and the holding bracket 122 in a specific distance 140 from one another. As a mere example, radially outermost portions or horizontal portions of the carrying bracket 123 and the holding bracket 122 may be spaced apart from each other by the distance 140 (illustrated as a dashed double arrow).

As a mere example, the belt 130 is illustrated as being coupled to the carrying bracket 123. Thus, when the joint 124 is locked and the belt 130 is attached to the back rest 53 of the second passenger seat 52, the baby bassinet 110 can be kept in a stable position.

With respect to Figure 4, such stable position can even be maintained when the back rest 53 of the second passenger seat 52 is reclined as illustrated in Figure 4 by a curved arrow. Specifically, as the distance 140 between the carrying bracket 123 and the holding bracket 122 is maintained (compared to the upright position of the back rest 53 in Figure 3), the entire aircraft baby bassinet 100 rotates around the stopper 129 during the movement of the back rest 53.

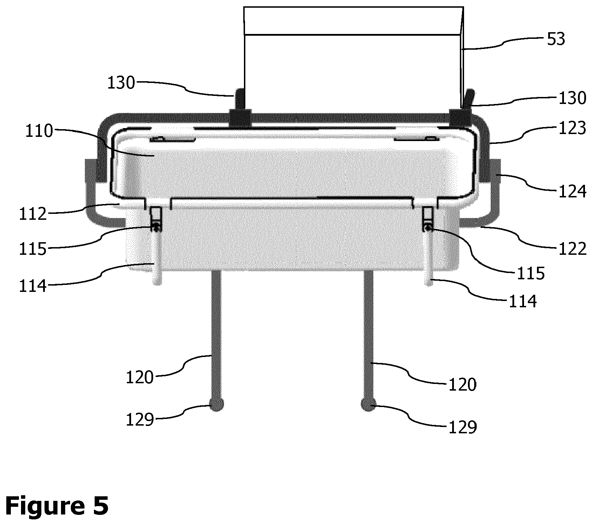

Figure 5 schematically illustrates a perspective view of the aircraft baby bassinet 100 of Figure 3, wherein only an upper portion of the back rest 53 is illustrated.

As can be derived from Figure 5, the stand 120 is implemented by a pair of upright posts 120 having a stopper 129 at their bottom end. It is to be understood that the positions of the stand posts 120 along the longitudinal direction of the baby bassinet 110 (left-right direction in Figure 5) can be arbitrarily chosen and are not restricted to the illustrated positions. Each of the stand posts 120 is coupled to (or integrated into) the holding bracket 122 (not visible in Figure 5 as it is covered by the baby bassinet 110). Furthermore, the belt 130 is connected to the carrying bracket 123 and wrapped around the back rest 53.

Figure 5 further illustrates the holding bracket 122 as being coupled to the outside of the carrying bracket 123 where the joint 124 is formed. It is to be understood that the joint 124 may likewise be formed by coupling/connecting the holding bracket 122 to the frame 112 of the baby bassinet 110 and to couple the carrying bracket 123 at the outside of the joint 124.

Furthermore, the joint 124 can include disc-like components at each end of the holding bracket 122 as well as the carrying bracket 123 as well as the frame 112. Such disc-like components may be equipped with a lock or brake (not explicitly illustrated), in order to fix a rotational position of the joint 124. Such lock or brake can be arranged between two of the disc-like components and/or in a centre axis thereof. As a mere example, corresponding teeth may be provided on each disc-like component, which may engage when the discs are pressed to one another, so that the teeth block any rotation. Instead of teeth, two corresponding surfaces of the holding bracket 122 and the carrying bracket 123 may be pressed onto one another, in order to block rotation by friction of these surfaces. In order to allow swivelling of the baby bassinet 110, the lock or break between the frame 112 and the adjacent bracket (holding bracket 122 or carrying bracket 123) may either not be present or may be in an open position.

With respect to Figure 5, it can be derived that after losing the belt 130, the carrying bracket 123 may be folded upwards above the baby bassinet 110, so that it functions as a handlebar. Likewise, the joint 124 may be disassembled by removing the holding bracket 122, so that the entire stand 120 can be separated from the carriable baby bassinet 110.

It is believed that the advantages of the technique presented herein will be fully understood from the foregoing description, and it will be apparent that various changes may be made in the form, constructions and arrangement of the exemplary aspects thereof without departing from the scope of the claims.

## Claims

1. An aircraft section (10), comprising:
a floor (5);
a first passenger seat (51);
a second passenger seat (52) arranged in front of the first passenger seat (51); and
an aircraft baby bassinet (100) comprising:
- a baby bassinet (110) having a frame (112); and
- a holding bracket (122),
**characterised in that**
the holding bracket (122) is configured to articulate the frame (112),
the aircraft baby bassinet (100) further comprises:
- a stand (120) coupled to the holding bracket (122) and comprising a foot (126) configured to stand on the floor (5) in front of the first passenger seat (51); and
- a belt (130) attached to a back rest (53) of the second passenger seat (52).

2. The aircraft section (10) of claim 1, wherein the foot (126) comprises a stopper (129).

3. The aircraft section (10) of one of claims 1 to 2, wherein the stand (120) is formed to have the foot (126) arranged at least partially underneath the first passenger seat (51).

4. The aircraft section (10) of claim 1, wherein the stand (120) forms an upright frame (120) of a contour following a contour of the back rest (53) of the second passenger seat (52).

5. The aircraft section (10) of one of claims 1 to 4, wherein the aircraft baby bassinet (100) further comprises:
- a joint (124) coupled to or integrated into the holding bracket (122) to articulate the frame (112).

6. The aircraft section (10) of claim 5, wherein the aircraft baby bassinet (100) further comprises:
- a carrying bracket (123) coupled to the joint (124) and configured to rotate relative to the holding bracket (122).

7. The aircraft section (10) of claim 6, wherein the joint (124) is configured to lock, in order to block the rotation of the carrying bracket (123) relative to the holding bracket (122).

8. An aircraft (1), comprising:
at least one aircraft section (10) of one of claims 1 to 7.

## Patentansprüche

1. Flugzeugabschnitt (10), umfassend:
einen Boden (5);
einen ersten Passagiersitz (51);
einen zweiten Passagiersitz (52), der vor dem ersten Passagiersitz (51) angeordnet ist; und
ein Babybassinet für ein Flugzeug (100), umfassend:
- ein Babybassinet (110) mit einem Rahmen (112); und
- eine Halterung (122),
**dadurch gekennzeichnet, dass**
die Halterung (122) dazu ausgelegt ist, den Rahmen (112) gelenkig zu bewegen,
das Babybassinet für ein Flugzeug (100) ferner Folgendes umfasst:
- einen Ständer (120), der mit der Halterung (122) gekoppelt ist und einen Fuß (126) umfasst, der dazu ausgelegt ist, auf dem Boden (5) vor dem ersten Passagiersitz (51) zu stehen; und
- einen Gurt (130), der an einer Rückenlehne (53) des zweiten Passagiersitzes (52) befestigt ist.

2. Flugzeugabschnitt (10) nach Anspruch 1, wobei der Fuß (126) einen Stopper (129) umfasst.

3. Flugzeugabschnitt (10) nach einem der Ansprüche 1 bis 2, wobei der Ständer (120) so ausgebildet ist, dass der Fuß (126) zumindest teilweise unter dem ersten Passagiersitz (51) angeordnet ist.

4. Flugzeugabschnitt (10) nach Anspruch 1, wobei der Ständer (120) einen aufrechten Rahmen (120) einer Kontur bildet, die einer Kontur der Rückenlehne (53) des zweiten Passagiersitzes (52) folgt.

5. Flugzeugabschnitt (10) nach einem der Ansprüche 1 bis 4, wobei das Babybassinet für ein Flugzeug (100) ferner Folgendes umfasst:
- ein Gelenk (124), das mit der Halterung (122) gekoppelt oder in diese integriert ist, um den Rahmen (112) gelenkig zu bewegen.

6. Flugzeugabschnitt (10) nach Anspruch 5, wobei das Babybassinet für ein Flugzeug (100) ferner Folgendes umfasst:
- eine Traghalterung (123), die mit dem Gelenk (124) gekoppelt ist und dazu ausgelegt ist, sich relativ zu der Halterung (122) zu drehen.

7. Flugzeugabschnitt (10) nach Anspruch 6, wobei das Gelenk (124) dazu ausgelegt ist, zu verriegeln, um die Drehung der Traghalterung (123) relativ zu der Halterung (122) zu blockieren.

8. Flugzeug (1), umfassend:
mindestens einen Flugzeugabschnitt (10) nach einem der Ansprüche 1 bis 7.

## Revendications

1. Section d'aéronef (10), comprenant:
un plancher (5);
un premier siège passager (51);
un deuxième siège passager (52) disposé devant le premier siège passager (51); et
un couffin d'aéronef (100) comprenant:
- un couffin (110) comportant une structure (112); et
- un étrier de maintien (122),
**caractérisée en ce que**
l'étrier de maintien (122) est conçu de sorte que la structure (112) soit articulée,
le couffin d'aéronef (100) comprend en outre:
- un support (120) accouplé à l'étrier de maintien (122) et comprenant un pied (126) conçu pour être posé sur le plancher (5) devant le premier siège passager (51); et
- une sangle (130) attachée à un dossier (53) du deuxième siège passager (52).

2. Section d'aéronef (10) selon la revendication 1, dans laquelle le pied (126) comprend un élément d'arrêt (129).

3. Section d'aéronef (10) selon l'une des revendications 1 et 2, dans laquelle le support (120) est formé de sorte que le pied (126) soit placé au moins partiellement sous le premier siège de passager (51).

4. Section d'aéronef (10) selon la revendication 1, dans laquelle le support (120) forme une structure verticale (120) dont le contour suit un contour du dossier (53) du deuxième siège de passager (52).

5. Section d'aéronef (10) selon l'une des revendications 1 à 4, dans laquelle le couffin d'aéronef (100) comprend en outre:
- une articulation (124) accouplée ou intégrée à l'étrier de maintien (122) de sorte que la structure (112) soit articulée.

6. Section d'aéronef (10) selon la revendication 5, dans laquelle le couffin d'aéronef (100) comprend en outre:
- un étrier porteur (123) accouplé à l'articulation (124) et conçu pour tourner par rapport à l'étrier de maintien (122).

7. Section d'aéronef (10) selon la revendication 6, dans laquelle l'articulation (124) est conçue pour se verrouiller, afin de bloquer la rotation de l'étrier porteur (123) par rapport à l'étrier de maintien (122).

8. Aéronef (1), comprenant:
au moins une section d'aéronef (10) selon l'une des revendications1 à 7.
